# EUROPEAN PATENT APPLICATION

(11) **EP 1 646 003 A1**
(43) Date of publication of application: **12.04.2006**
(21) Application number: 05109196.5
(22) Date of filing: 04.10.2005
(51) Int. Cl.: G06Q 30/00

(54) **System, method and computer program for performing real-time market researches**

(30) Priority: 07.10.2004 US 962186
(71) Applicant: Artericerca s.a.s., 20121 Milano (IT)
(72) Inventor: AVANZI, Umberto, I-20121, MILANO (IT); PESCIA, Massimo, I-20149, MILANO (IT)
(74) Representative: Pezzoli, Ennio

(57) **Abstract**

A system (100;500;900) for performing market researches is proposed. The system includes means (145-150;505-510;920-925) for detecting an event relating to the selection of at least one good by a consumer, means (245;630;1030) for notifying the event to a service center (250), and means (330-339) for causing the service center to contact the consumer for collecting market data relating to the at least one good in response to the notification of the event.

## Description

### Technical field

The present invention relates to the data processing field. More specifically, the present invention relates to market researches.

### Background art

Market researches play a key role in sales management. As it is well known, any market is influenced by a multitude of social, psychological and cultural factors; those factors strongly affect the behavior of the corresponding consumers. Each market research is aimed at understanding the behavior of the consumers in a specific market; typically, the market research addresses end-users of large consumer goods.

The market research can relate to a broad analysis of the whole market (and especially of its estimated growth), to a feasibility study, to the examination of a specific product (or a category of products), and the like. The result of the market research is of paramount value for developing successful marketing programs; for example, this information can be used to evaluate the trend of the market, the positioning of a product, a brand, or a company.

Each market research always involves the collection of data, relating to the desired product(s), directly from the consumers. This (raw) market data is then analyzed with different techniques, in order to estimate the desired information (such as the preferences, habits, perceptions, or motivations of the consumers). Typically, the market data is collected by interviewing a panel of consumers; for example, the interviews can be carried out in house to house, on the telephone, in the streets, or at the exit of shopping centers.

A critical problem of every market research is that of providing valid and reliable results. Particularly, several factors can adversely affect the quality of the market data that is collected from the consumers.

For example, the attitude of each consumer when he/she is interviewed can significantly differ from the one at the time relevant to the questions that are to be answered. As a result, the collected market data can be ineffective in correctly expressing the real opinions of the consumers.

Another source of errors is the poor motivation of the consumers participating in the market research. Indeed, the discount coupons that are commonly offered to the consumers (in an attempt to overcome this drawback) are not completely satisfactory. Particularly, those coupons do not convey the feeling of an immediate advantage for the consumers (being often associated with the idea of complex procedures for redeeming them).

A further drawback of the market research techniques known in the art is that they are unable to catch specific and unexpected behaviors of the consumers; this results in the lost of valuable information.

### Summary of the invention

According to the present invention, the collection of market data in real time is suggested.

Particularly, an aspect of the invention provides a system for performing market researches. The system includes means for detecting an event relating to the selection of one or more goods by a consumer. Further means is provided for notifying the event to a service center. The system also includes means for causing the service center to contact the consumer, in order to collect market data relating to the goods, in response to the notification of the event

The proposed solution strongly increases the quality of the collected market data; as a result, the validity and reliability of the corresponding market research is substantially enhanced.

Particularly, the market data is collected when the goods are selected (or at most after a short delay). In any case, the attitude of the consumer can be deemed substantially the same as the one at the time of the selection; therefore, the market data should correctly express the real opinion of the consumer about the goods.

The preferred embodiments of the invention described in the following provide additional advantages.

For example, the event relating to the selection of the goods is detected by means of a transponder that is associated with each good (for example, based on the RFID technology).

The proposed implementation is very simple and cost effective; moreover, it can be readily integrated into solutions already available.

A way to further improve the solution is of conditioning the action of contacting the consumer to a predefined selection criterion.

As a consequence, different policies for collecting the market data can be readily implemented.

A suggested criterion relates to the selection of multiple goods belonging to a common category.

This feature allows investigating the motivation at the basis of this conduct.

As a further enhancement, the selection criterion is based on the detection of any significant divergence from historical information of the consumer.

In this way, it is possible to analyze the reason of any change in the behavior of the consumer.

In a particular embodiment of the invention, each good consists of a product on sale in a shopping center of the self-service type; in this case, the system detects the insertion of the product into a shopping container (such as a shopping cart).

Therefore, the market data is collected exactly when the consumer chooses the product.

In addition, the system also detects the removal of the product from the shopping container (before reaching a checkout area).

As a result, the reason of this behavior can be investigated immediately.

As a further improvement, the system accumulates a discount for each product when the consumer returns one or more answers to corresponding questions relating to the product (which discount is applied to the price of the product).

This feature strongly increases the motivation of the consumer participating in the market research; indeed, the discount offered for the product is perceived as an immediate saving (which does not require any further operation).

In a further embodiment of the invention, the system detects the purchase of the goods.

In this way, it is possible to select the goods for which market data must be collected among the ones that have just been purchased by the consumer.

Preferably, the consumer is provided with an access code identifying the purchase; the code is used to access a kiosk (for downloading one or more questions relating to the goods from the service center and for returning corresponding answers entered by the consumer).

The proposed technique allows adding the functionality of the solution of the invention to standard shopping centers in a very simple manner.

As a further improvement, the production of the access codes is disabled according to the availability of the kiosks.

This prevents forming queues at the kiosks.

In a still further embodiment of the invention, the system detects the consumption of each good.

As a result, the market data is collected when the consumer actually uses the good.

A suggested choice for implementing the above-mentioned feature is that of detecting the insertion of a corresponding package into a rubbish bin.

In this way, the consumption of every kind of product can be identified (assuming that the product is provided in a package).

Another aspect of the present invention provides a data processing structure including the above-described system and the service center.

A further aspect of the present invention provides an accessory device for a shopping container (for example, a Personal Shopping Assistant or PSA) to be used in the system.

A still further aspect of the invention provides a shopping container including the accessory device (for example, a shopping cart).

Another aspect of the present invention provides a rubbish bin for use in the system.

Moreover, an aspect of the present invention provides a corresponding method for performing market researches.

A further aspect of the present invention provides a computer program for performing this method.

Further features and advantages of the solution according to the present invention will be made clear by the following description of a preferred embodiment thereof, given purely by way of a non-restrictive indication, to be read in conjunction with the attached figures. In this respect, it should be understood that the figures are not necessary drawn to scale and that, unless otherwise indicated, they are merely intended to conceptually illustrate the structures and methods described herein.

### Brief description of the drawings

Figure 1 is a pictorial representation of a system for performing market researches according to an embodiment of the invention;
Figure 2 shows a partial functional scheme of the system;
Figure 3 illustrates the main software components of the system;
Figures 4a-4b are an activity diagram describing the logic of the system;
Figure 5 is a pictorial representation of a further embodiment of the system;
Figure 6 shows a partial functional scheme of this system;
Figure 7 illustrates the main software components of the system;
Figures 8a-8b are an activity diagram describing the logic of the system;
Figure 9 is a pictorial representation of a still further embodiment of the system;
Figure 10 shows a partial functional scheme of this system;
Figure 11 illustrates the main software components of the system; and
Figures 12a-12b are an activity diagram describing the logic of the system.

### Detailed description of the preferred embodiment(s)

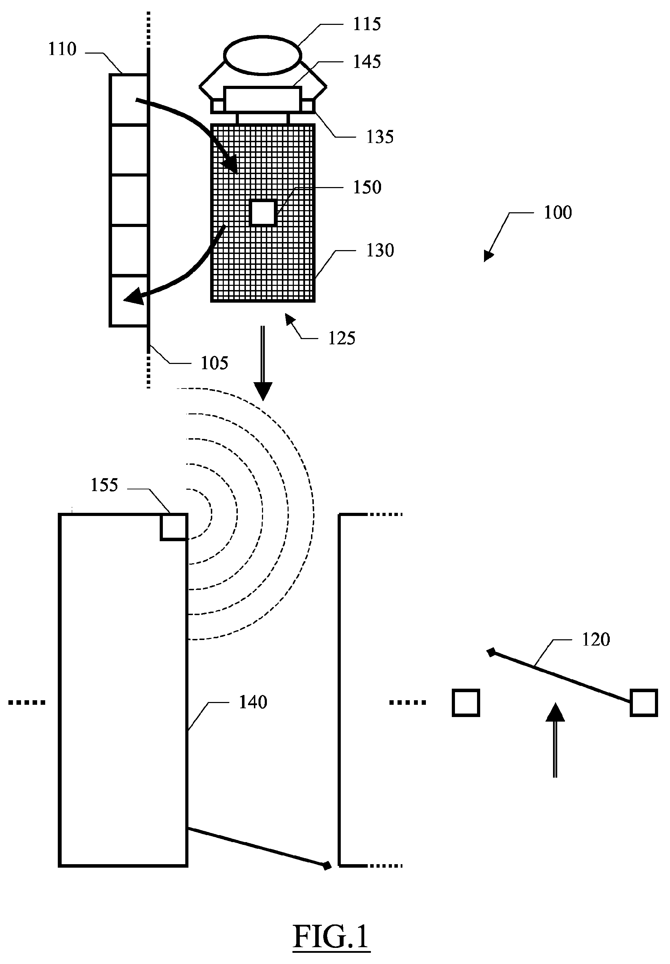

With reference in particular to Figure 1, a system 100 for performing market researches is shown. The system 100 is implemented in a shopping center of the self-service type, such as a supermarket. The supermarket is provided with a series of shelves 105 (for example, arranged along corresponding aisles); a wide range of products 110 on sale in the supermarket is available on the shelves 105.

Each consumer 115 accesses the supermarket through an entrance 120. Typically, the consumer 115 is provided with a shopping cart 125; the shopping cart 125 consists of a basket 130 mounted on wheels and with a push handle 135. The consumer 115 moves along the aisles and serves himself/herself, by taking the desired products 110 from the shelves 105 and inserting them into the shopping cart 125. At the end, the consumer 115 goes towards a series of checkout counters 140 at an exit of the supermarket (each one provided with a corresponding cash register); the consumer 115 can then pay for the shopping and leave the supermarket.

A Personal Shopping Assistant (PSA) 145 is mounted on the push handle 135 of each shopping cart 125. The PSA 145 consists of a small computer, which is typically used for facilitating the shopping; for example, the PSA 145 can guide the consumer 115 through the supermarket, can locate a desired product, can track its position and display special offers on products as the consumer is passing past them, and the like.

As described in detail in the following, in a preferred embodiment of the invention the PSA 145 is also used to detect any change in the content of the shopping cart 125; particularly, the PSA 145 can detect the insertion of a new product 110 or the removal of a product 110 that is not desired any longer. For this purpose, the PSA 145 is coupled with a sniffer 150 (which is fastened below the basket 130 in a central region thereof). The above-mentioned event triggers the collection of market data relating to the product in real-time.

Each counter 140 is further provided with a transceiver 155 for communicating with the PSA 145. Particularly, the transceiver 155 receives a list of the products included in the shopping cart 125 for implementing au automatic checkout; the transceiver 155 also disables the above-described functionality of the PSA 145 when the consumer 115 reaches the counters 140; in this way, the removal of the products 110 form the shopping cart 125 during the checkout or after the consumer 115 has left the supermarket is disregarded.

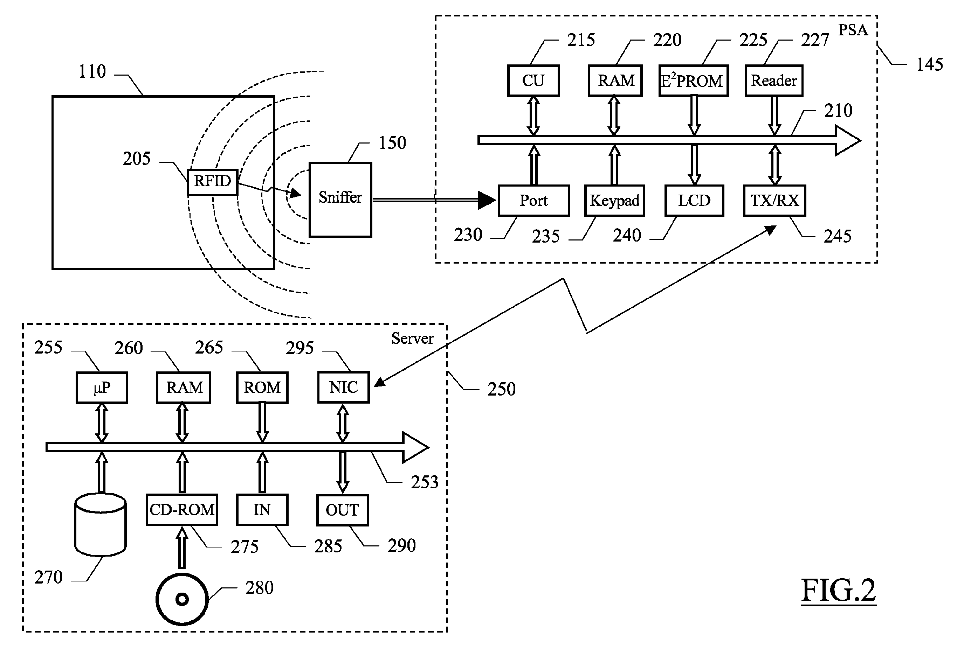

As shown in Figure 2, each product 110 is provided with a device 205 based on the Radio Frequency Identification (RFID) technology. The RFID device 205 consists of a transponder, which detects and automatically responds to a (low-power RF) interrogation signal. Typically, the RFID device 205 is of the passive type (i.e., it does not require any power source but takes the energy for its operation from the same interrogation signal); in this case, the RFID device 205 can be in the form of a small label that is applied to the product 110, can be printed on a surface thereof, or it can be incorporated directly into a corresponding package. Each RFID device 205 is configured to emit a desired response signal; in the application at issue, the RFID device 205 returns a serial number that uniquely identifies the product 110. This technology has been proposed in the last years for facilitating the tracking of items in warehouse applications, or for providing information about products on sale in the supermarket.

Each PSA 145 is based on a conventional architecture with a bus 210. Particularly, the PSA 145 is provided with a control unit (CU) 215. A RAM 220 is used as a working memory by the control unit 215, while a flash E²PROM 225 stores information that must be preserved even when a power supply is off (such as a control program of the PSA 145). The PSA 145 has a magnetic card reader 227 and a port 230 (for example, of the serial type) for connecting the sniffer 150. The PSA 145 further includes a keypad 235 and a Liquid Crystal Display (LCD) 240. A Transceiver (TX/RX) 245 is used to communicate with a central server 250 of the supermarket.

The sniffer 150 senses the RFID devices 205 of the products 110 that are present in the shopping cart. For this purpose, the sniffer 150 continually broadcasts the interrogation signal (for example, every second); the effective distance of the interrogation signal corresponds to the size of the basket, so as to ensure that only the RFID devices 205 of the products 110 inside the shopping cart are activated (and not the ones of the products on the shelves). At the same time, the sniffer 150 listen for any response signal from the (activated) RFID devices 205.

The server 250 (for example, consisting of a mini computer) is formed by several units that are connected in parallel to a communication bus 253. In detail, one or more microprocessors (µP) 255 control operation of the server 250; a RAM 260 is directly used as a working memory by the microprocessor 255, and a ROM 265 stores basic code for a bootstrap of the server 250. Several peripheral units are further connected to the bus 253 (by means of respective interfaces). Particularly, a mass memory consists of a hard-disk 270 and a drive 275 for reading CD-ROMs 280. Moreover, the server 250 includes input units 285 (for example, a keyboard and a mouse), and output units 290 (for example, a monitor and a printer). A network Interface Card (NIC) 295 is used to communicate with each PSA 145.

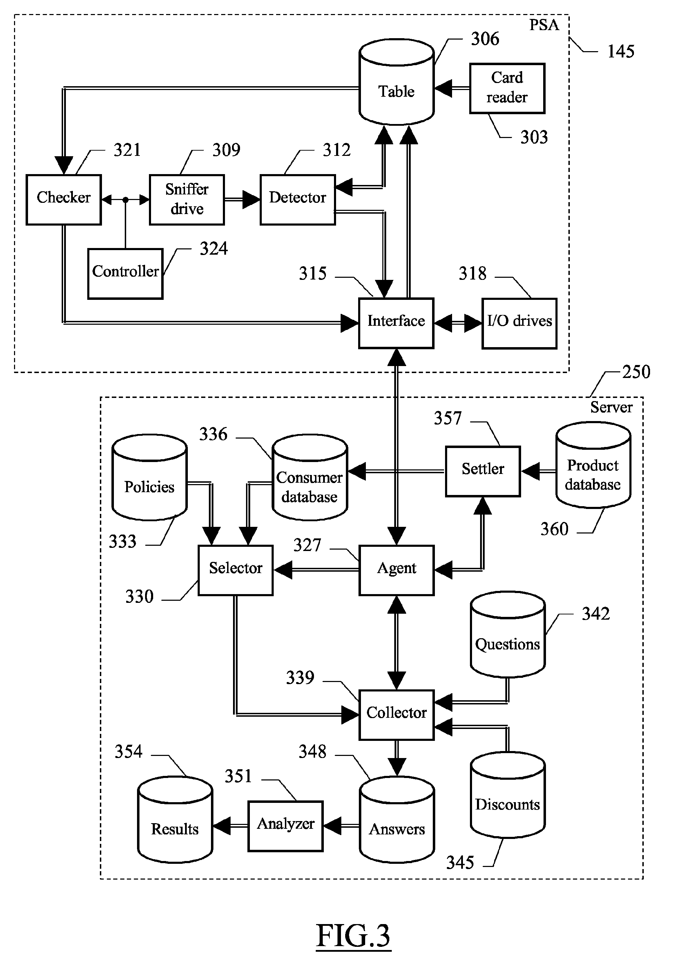

Moving now to Figure 3, the main software components that can be used for practicing the invention are illustrated. The information (programs and data) is typically stored on the E²PROM of the PSA 145 and on the hard disk of the server 250, and it is loaded (at least partially) into the corresponding working memories when the programs are running. The programs are initially installed onto the hard disk of the server 250 from CD-ROM.

Particularly, each PSA 145 includes a drive 303 for the card reader; the card reader drive 303 allows the consumer (who has taken the shopping cart) to identify himself/herself by means of a personal fidelity card (for example, through a corresponding identification code). The identification code of the consumer is stored by the card reader drive 303 into a table 306.

A further drive 309 controls the sniffer that is connected to the PSA 145. The sniffer drive 309 periodically provides a new list of products that are currently present in the shopping cart to a detector 312 (with the products that are identified by the corresponding serial numbers). The detector 312 compares this information with an old version of the product list that is stored in the table 306. Whenever a difference is discovered, the event is notified by the detector 312 to the server 250 through a corresponding interface 315 (passing the identification code of the consumer and the serial number of the products); particularly, any product of the new list that is not included in the old list has been inserted into the shopping cart, whereas any product of the old list that is not included in the new list has been removed from the shopping cart. At the same time, the detector 312 updates the information stored in the table 306 accordingly (by replacing the old product list with the new one).

The interface 315 is also coupled with I/O drives for the keypad and the LCD, denoted as a whole with 318. The I/O drives 318 are used to display information downloaded from the server 250 (through the interface 315). Particularly, whenever the server 250 decides to collect market data about a selected product (which has been inserted into or removed from the shopping cart), a corresponding request is transmitted to the PSA 145; preferably, this request is also accompanied by the offer of a discount to be applied to the price of the product if the consumer agrees to participate in this survey. In the affirmative case, the server 250 sends one or more questions about the product to the PSA 145. The consumer then enters the corresponding answers by means of the keypad; these answers are then returned to the server 250 (through the interface 315). At the end of the survey, the server 250 instructs the interface 315 to store the applicable discount for the product into the respective record of the product list (stored in the table 306).

The PSA 145 also includes a checker 321, which is used to automate the checkout (when the consumer reaches a counter). For this purpose, the checker 321 extracts the product list from the table 306 (together with the identification code of the consumer). This information identifies the products that are currently present in the shopping cart; at the same time, it specifies any discount to be applied to the products (as a result of the participation in the corresponding survey). The product list and the identification code are uploaded to the server 250 through the interface 315.

A module 324 controls the sniffer drive 309 and the checker 321. Particularly, the controller 324 instructs the sniffer drive 309 to disable its operation in response to a corresponding exit signal received from the transceivers of the counters (with the sniffer drive 309 that is typically enabled as soon as the PSA 145 is turned on). At the same time, the controller 324 enables the checker 321 to transmit the product list to the server 250.

Moving now to the server 250, a communication agent 327 is used to control the exchange of information with each PSA 145.

Particularly, the agent 327 supplies the information relating to any product that has been inserted into or removed from the shopping cart to a selector 330. The selector 330 determines whether market data is to be collected for the product.

For this purpose, the selector 330 accesses a repository 333, which stores predefined selection policies. For example, the repository 333 directly identifies the desired products to be analyzed (either specifically or by category). In addition, a selection policy can indicate that the reason of the removal of every product from the shopping cart must be always investigated (for example, to understand if this behavior is due to a special offer relating to a product of the same category). Another example consists of selecting every product for which two or more items have been inserted into the shopping cart (in an attempt to discover the motivation at the basis of this behavior).

The selector 330 also accesses a database 336, which stores information relating to the consumers (each one identified by the corresponding code). Typically, the database 336 includes personal information of the consumers (such as their names, ages, professions, hobbies, and the like); moreover, the database 336 stores historical information of each consumer (for example, consisting of a log of the purchases made by the consumer during a predefined time frame, such as the last year). The selector 330 compares the product with the historical information of the consumer; the product is always selected when its purchase significantly diverges from the habits of the consumer (as defined by the corresponding historical information). For example, a divergence is identified if the corresponding type of product is purchased for the first time, if another equivalent product has always been purchased in the past, and the like.

The selector 330 supplies information about the product to be analyzed (for example, its serial number and the reason of the selection) to a collector 339. The collector 339 accesses a database 342, which stores different sets of questions for each product and reason of the selection. The collector 339 also accesses a database 345 providing the discounts that are offered for the products (should the consumer agree to participate in the corresponding survey). The collector 339 extracts the relevant questions (from the database 342) and the discount corresponding to the product (from the database 345); this information is then transmitted to the PSA 145 through the agent 327.

The collector 339 receives the answers provided by the consumer to those questions (through the agent 327), which answers are then saved into a corresponding repository 348. An analyzer 351 processes the answers in the repository 348, in order to determine corresponding results of the market research. The results of the market research are then stored by the analyzer 351 into a further repository 354.

The agent 327 also passes the identification code of the consumer and the list of the products in his/her shopping cart (received from the checker 321) to a settler 357. The settler 357 determines the price of each product that has been purchased (with the applicable discount). For this purpose, the settler 357 accesses a database 360 of the products on sale in the supermarket. The settler 357 transmits the information so obtained to the register of the counter (for the checkout); at the same time, the corresponding entry for the consumer in the database 336 is updated accordingly.

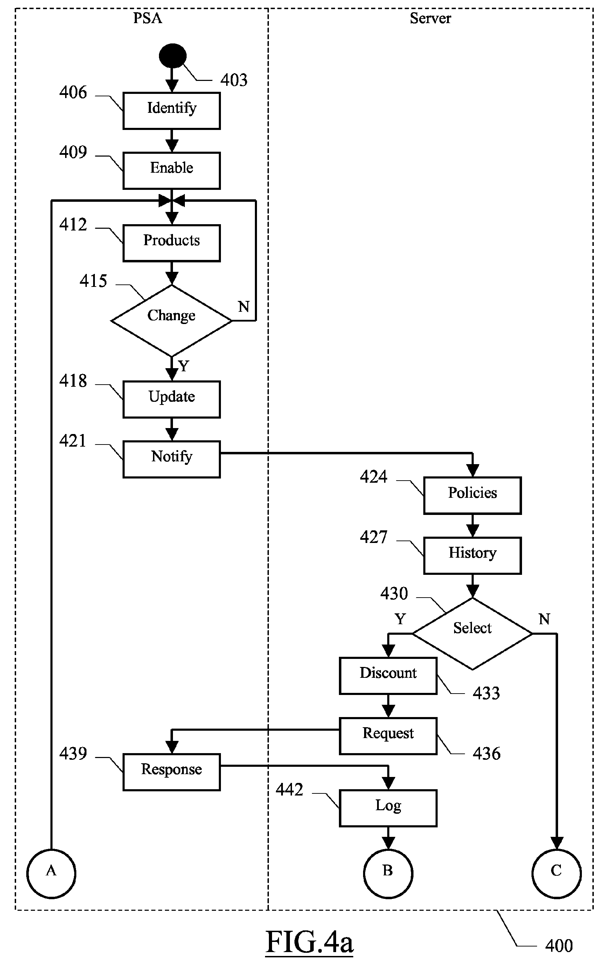

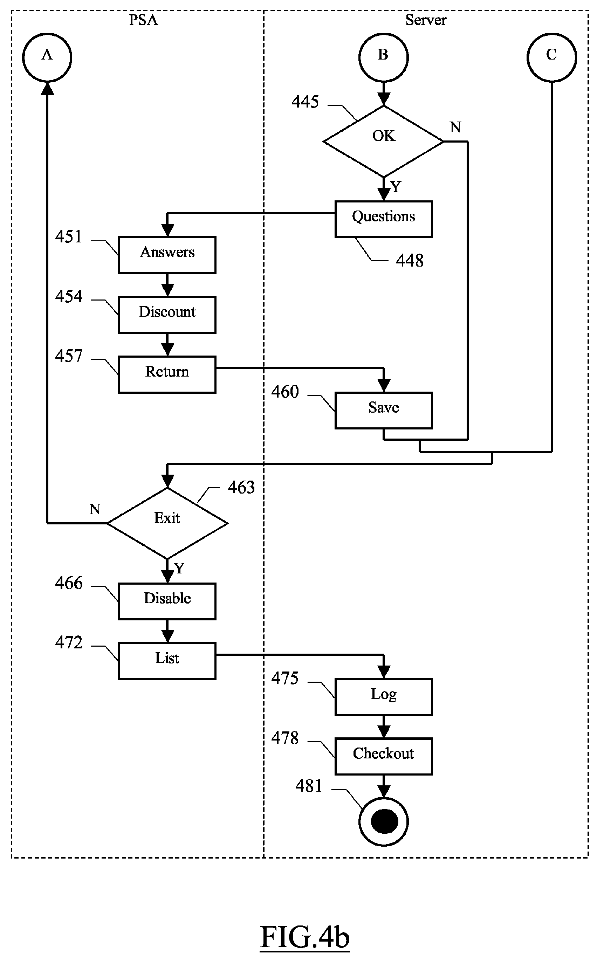

As shown in Figures 4a-4b, the logic flow of a market research process implemented by the above-described system is represented with a method 400. The method begins at the black start circle 403 in the swim-lane of the PSA. Continuing to block 406, the consumer takes the shopping cart from its parking zone by identifying himself/herself through the code that is read from the corresponding fidelity card. In response thereto, the PSA turns on and enables the sniffer at block 409.

The flow of activity passes to block 412, wherein the products currently present in the shopping cart are identified. A test is then made at block 415 to determine whether any change has occurred (i.e., a product has been inserted or removed). If not, the method returns to block 412 for repeating the same operations continually. Once a change in the content of the shopping cart is detected, the method descends into block 418 wherein the information in the corresponding table is updated accordingly. The event is then notified to the server at block 421.

In response thereto, the server at block 424 verifies whether this event satisfies the predefined selection policies. Continuing to block 427, the server also compares the product with the historical information of the consumer. A test is then made at block 430 to determine whether the product is to be selected for collecting market data (because it either satisfies the selection policies and/or involves a significant divergence from the historical information). If so, the discount that will be offered to the consumer (for participating in the survey) is extracted from the respective database at block 433. A corresponding request it then transmitted to the PSA at block 436.

A response of the consumer is returned by the PSA to the server at block 439. The response of the consumer is logged at block 442 (in the swim-lane of the server). The flow of activity then branches at block 445 according to the decision of the consumer. If the consumer agrees to participate in the survey, the desired questions are retrieved and transmitted to the PSA at block 448. The consumer enters the answers to those questions at block 451 (in the swim-lane of the PSA). As a consequence, the applicable discount for the product is stored into the respective table at block 454. Continuing to block 457, the answers are then returned to the server. Those answers are saved into the corresponding repository of the server at block 460 (so as to be available for off-line analysis).

The flow of activity proceeds to decision block 463 in the swim-lane of the PSA; the same point is also reached directly from block 445 (if the consumer does not agree to participate in the survey) or from block 430 (if the product is not selected for collecting market data). A test is now made to determine whether the exit signal has been received from the transceivers of the counters. If not, the method returns to block 412 for repeating the same operations continually.

As soon as the PSA receives the exit signal (meaning that the consumer has reached the counters), the sniffer is disabled at block 466. Descending into block 472, the list of the products that are present in the shopping cart (with any applicable discount) is retrieved and uploaded to the server. In response thereto, the server at block 475 updates the historical information of the consumer accordingly. The flow of activity then passes to block 478, wherein the product list is used to automate the checkout (by driving the corresponding register of the counter). The method then ends at the concentric white/black stop circles 481.

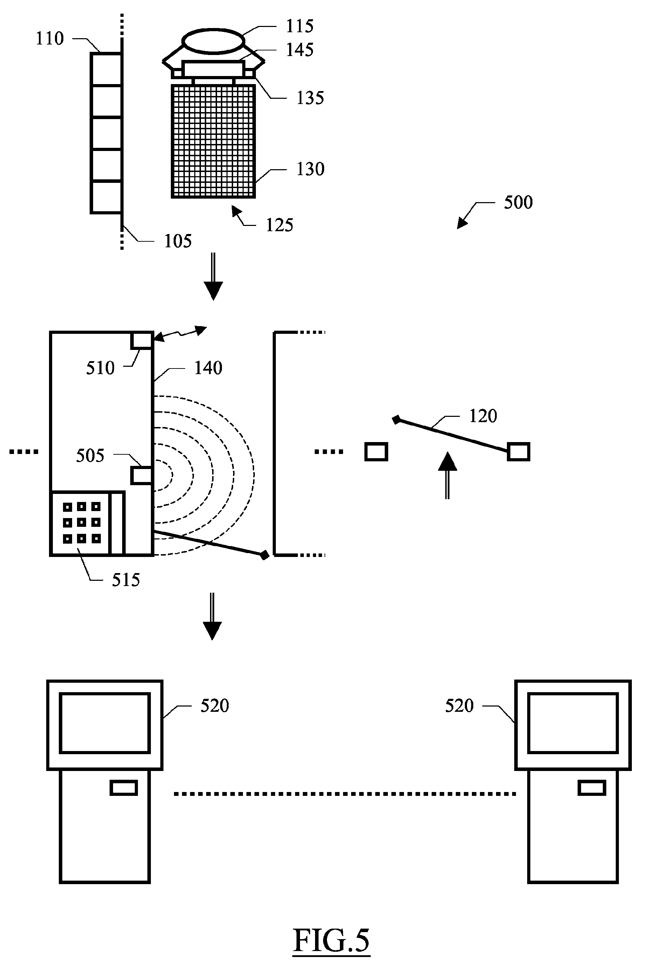

With reference now to Figure 5, a system 500 for performing market researches according to a different embodiment of the invention is shown (in the following, the elements corresponding to the ones of the preceding figures will be denoted with the same references, and their explanation will be omitted for the sake of brevity). The system 500 is always implemented in a supermarket; however, in this case the sniffers are moved from the shopping carts to the counters.

More in detail, each counter 140 is provided with a sniffer 505 (similar to the one described above). The sniffer 505 detects the content of the shopping cart 125 that is currently in front of the counter 140. The sniffer 505 is coupled with a corresponding transceiver 510. The transceiver 155 receives a list of the products in the shopping cart 125 from the sniffer 505; moreover, the transceiver 510 requests the corresponding PSA 145 to provide the identification code of the consumer 115 as it reaches the counter 140. This information is passed to the cash register of the counter 140 (denoted with 515) for implementing an automatic checkout. The register 515 also provides a unique access code (identifying the purchase) to the consumer 115.

The system 500 further includes a bank of kiosks 520, which are placed just outside the counters 140; preferably, the number of kiosks 520 corresponds to a predefined percentage of the counters 140 (for example, from 50% to 200%). The consumer 115 accesses an available kiosk 520 through his/her access code, so as to trigger the collection of market data relating to the products that have just been purchased.

The same solution may also be applied when the supermarket implements a standard checkout (for example, when the products on sale are identified by means of a corresponding bar code). In this case, the system does not require any PSA, sniffer and transceiver (with the consumers that identify themselves using their fidelity cards directly at the counters).

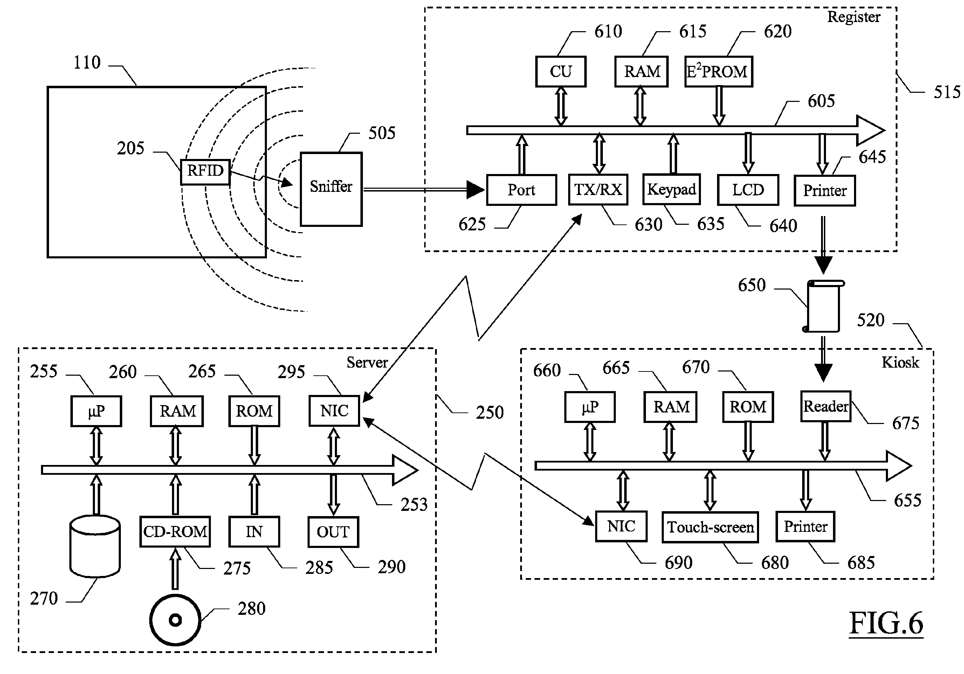

As shown in Figure 6, the sniffer 505 senses the RFID devices 205 of the products 110 that are present in the shopping cart (at the counter); for this purpose, the effective distance of the interrogation signal broadcast by the sniffer 505 corresponds to the wide of a passage that is available for the shopping cart (so as to ensure that the RFID devices 205 of the products in other shopping carts are not activated).

Each register 515 is based on a conventional architecture with a bus 605, a control unit 610, a RAM 615, and an E²PROM 620. A port 625 is used for connecting the sniffer 505, while a Transceiver (TX/RX) 630 is used to communicate with the server 250 (and the PSAs). The register 515 further includes a keypad 635 (for entering the serial numbers of the products manually in case of problems), and a Liquid Crystal Display (LCD) 640 (for showing information relating to the purchase, such as the total amount to be paid). A printer 645 is used to generate a check 650 for the consumer. The check 650 can end with a message inviting the consumer to go to the kiosks 520; in this case, the access code (in the bar-code format) is printed at the bottom of the check 650.

A generic kiosk 520 typically consists of a stall, which embeds a dumb terminal. Particularly, the kiosk 520 is based on a conventional architecture with a bus 655, a microprocessor 660, a RAM 665 and a ROM 670. A bar code reader 675 is used to read the access code from the check 650. The kiosk 530 further includes a touch-screen 680 (for allowing the consumer to interact with the kiosk 520), and a printer 685 (for generating a discount coupon or a voucher for collecting a free sample). A network Interface Card (NIC) 690 is used to communicate with the server 250.

Similar considerations apply if the supermarket implements a standard checkout. The only difference is that each register must be provided with a scanner (for reading the bar codes of the products that are purchased) and with a magnetic card reader (for identifying the consumer through his/her fidelity card).

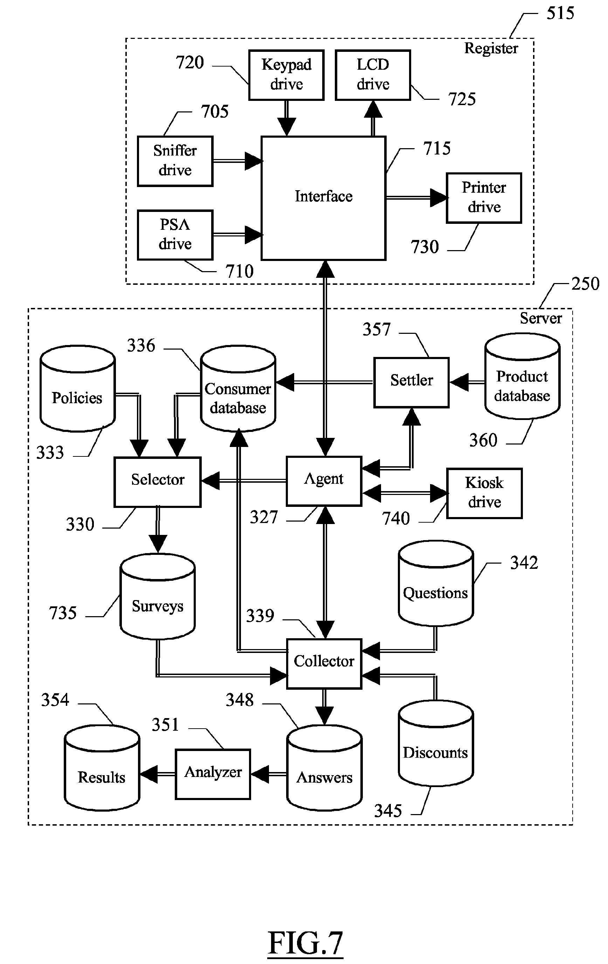

Moving now to Figure 7, each register 515 includes a drive 705 for the corresponding sniffer; the sniffer drive 705 detects the products that are present in the shopping cart. A further drive 710 receives the identification code of the consumer from his/her PSA. The information provided by the sniffer drive 705 and by the PSA drive 710 is passed to an interface 715, which transmits it to the agent 327 on the server 250. The interface 715 is also coupled with a drive 720 for the keypad, a drive 725 for the LCD, and a drive 730 for the printer.

The agent 327 provides the product list and the identification code to the settler 357 (for automating the checkout). Moreover, the same information is also provided to the selector 330. Whenever the selector 330 decides that a survey should be performed for collecting market data about one or more of the products that have just been purchased, a new access code is generated. As in the preceding case, the products to be analyzed are chosen according to the selection policies and the historical information of the consumer; however, the selector 330 preferably enables only a sample of the consumers according to a predefined selection rate (for example, between 5-10%), in order to avoid overloading the kiosks. Information about the new survey (for example, the serial numbers of the products to the analyzed and the reasons of their selection) is saved into a corresponding entry (identified by the access code) of a repository 735, which is accessed by the collector 339. Typically, the survey repository 735 is periodically cleared (for example, every night), so as to remove information about the surveys that have not been performed by the consumers.

The agent 327 receives checkout information from the settler 357 and the access code of the survey (when applicable) from the collector 339. This information is returned by the agent 327 to the interface 715, which controls the LCD drive 725 and the printer drive 730 accordingly.

The server 250 further includes a drive 740 for each kiosk. The kiosk drive 740 receives the access code of a specific survey, and passes it to the collector 339 (through the agent 327). The collector 339 extracts the information relating to the survey (identified by this access code) from the repository 735. The relevant questions (from the database 342) and the corresponding discounts (from the database 345) are then returned to the kiosk drive 740, which controls their downloading. The kiosk drive 740 also receives the answers provided by the consumer to those questions, which answers are then saved into the corresponding repository 348. In response thereto, the collector 339 instructs the kiosk drive 740 to return information for printing the applicable discount coupon or voucher; at the same time, the collector 339 deletes the entry for the completed survey from the corresponding repository 735.

Similar considerations apply if the supermarket implements a standard checkout. The only difference is that the sniffer drive is replaced with a bar-code reader drive (for providing the product list) and the PSA drive is replaced with a card reader drive (for providing the identification code of the consumer).

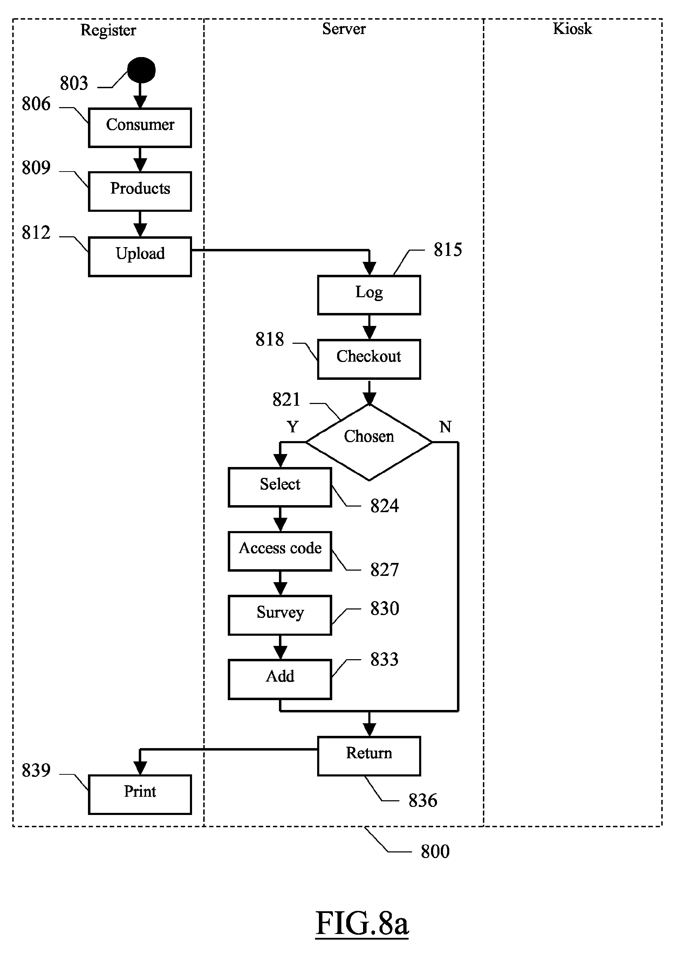

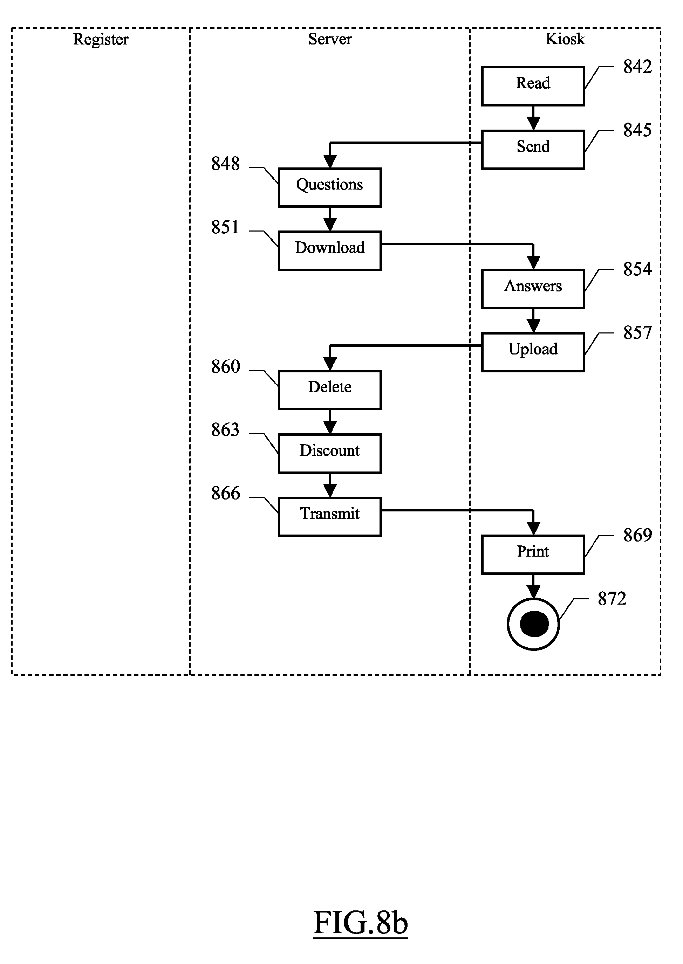

As shown in Figures 8a-8b, the logic flow of a market research process implemented by the above-described system is represented with a method 800. The method begins at the black start circle 803 in the swim-lane of the register. Continuing to block 806, the identification code of the consumer is received (through his/her PSA or the card reader of the register). The product list is likewise provided at block 809 (using either the sniffer or the bar code reader). The method then passes to block 812, wherein the information so obtained is uploaded to the server.

Moving to block 815, the historical information of the consumer is accordingly updated. The flow of activity then passes to block 818, wherein the product list is used to determine the checkout information. The method then verifies at block 821 whether the consumer has been chosen for performing the market research (according to the selection rate). If so, the server at block 824 selects the products (among the ones that have been purchased) for which the collection of market data is desired (according to the selection policies and the historical information of the consumer). Assuming that at least one product meets those conditions, a new access code for the corresponding survey is generated at block 827 (for example, incrementing by one a dedicated counter). Continuing to block 830, information about the new survey is saved into the corresponding repository. With reference now to block 833, the access code of the survey is added to the checkout information. The flow of activity then descends into block 836; the same point is also reached from block 821 directly when the consumer has not been chosen for the market research (or no purchased product meets the required selection conditions).

Considering now block 836, the checkout information so obtained is returned to the register. In response thereto, the register at block 839 prints the corresponding check (with the invitation message and the access code in bar-code format when necessary).

If the consumer decides to participate in the survey, he/she goes towards the kiosks; assuming that a kiosk is available, the consumer inserts the check into its bar-code reader at block 842. Continuing to block 845, the kiosk transmits the access code read from the check to the server. In response thereto, the server at block 848 extracts the information relating to the survey (identified by this access code) and determines the corresponding questions to be put to the consumer. The desired questions are downloaded to the kiosk at block 851. The consumer enters the answers to those questions at block 854 (in the swim-lane of the kiosk). Continuing to block 857, the answers are then uploaded to the server (where they are saved for off-line analysis).

With reference now to block 860, the entry for the completed survey in the corresponding repository is deleted. Continuing to block 863, the server determines the discount or the free sample for the consumer (as a result of the participation in the survey). This information is transmitted to the kiosk at block 866. As a result, the kiosk at block 869 prints the corresponding discount coupon (for a next visit to the supermarket) or the voucher for the free sample (which can be claimed immediately at an information desk of the supermarket). The method then ends at the concentric white/black stop circles 872.

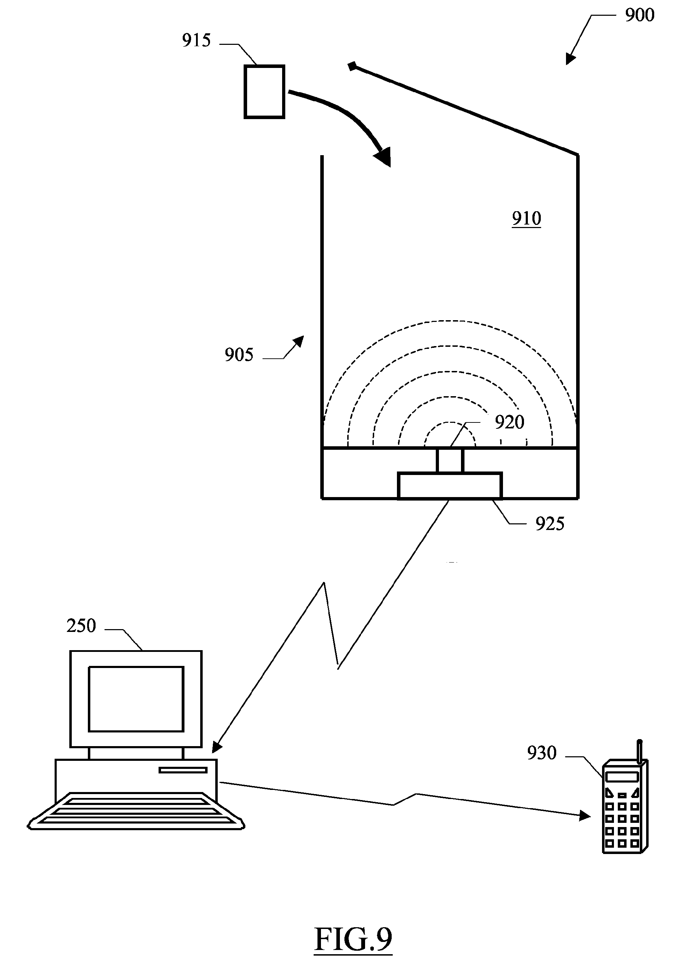

With reference now to Figure 9, a system 900 for performing market researches according to another embodiment of the invention is shown. In this case, the system 900 is implemented at the residence of the consumer. Particularly, the system 900 includes a rubbish bin 905 (for example, placed in the kitchen). The rubbish bin 905 consists of a container 910 for packages 915 of products that have been thrown away (typically, after their consumption). A sniffer 920 (similar to the one described above) is arranged below the container 910. The sniffer 920 continually detects the content of the rubbish bin 905 (for example, every minute). The sniffer 905 is coupled with a controller 925, which identifies the insertion of any new package 915 into the rubbish bin 905. The event is notified to the server 250. In turn, the server 250 calls the consumer on his/her telephone 930 for collecting market data relating to the corresponding product that has just been consumed.

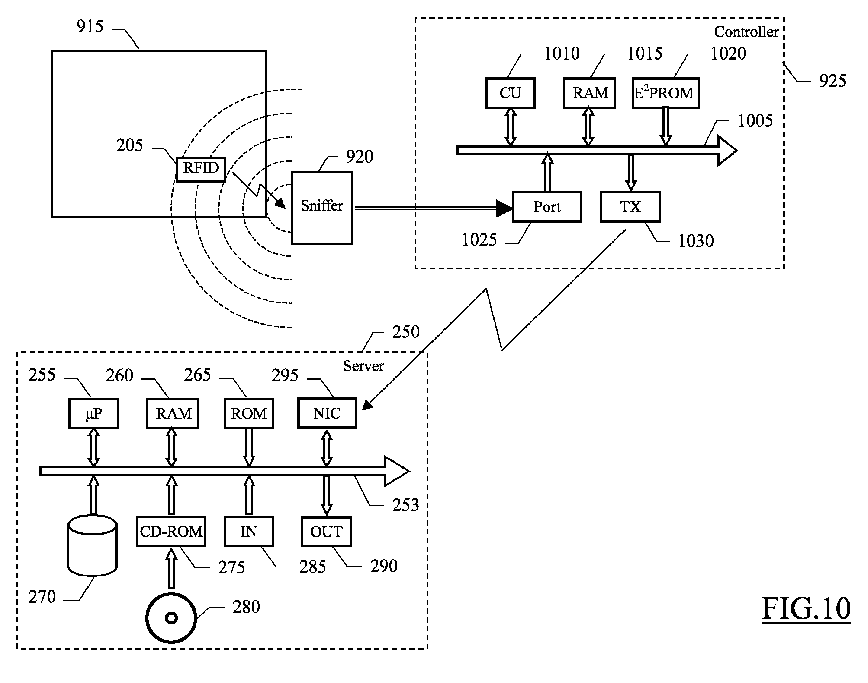

As shown in Figure 10, the sniffer 920 senses the RFID devices 205 of the packages 915 that are present in the rubbish bin; for this purpose, the effective distance of the interrogation signal broadcast by the sniffer 920 corresponds to the size of the corresponding container.

The controller 925 is formed by several units that are connected in parallel to a communication bus 1005. In detail, the controller 925 is provided with a control unit (CU) 1010. The control unit 1010 is coupled with a RAM 1015 and a flash E²PROM 1020. The controller 925 also includes a port 1025 for communicating with the sniffer 920. A Transmitter (TX) 1030 is used to communicate with the server 250.

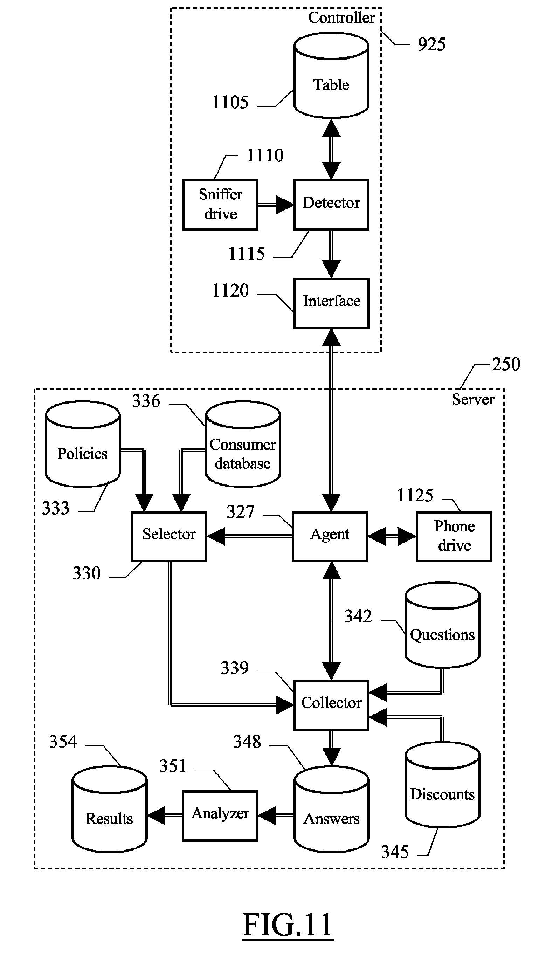

Moving now to Figure 11, the controller 925 includes a table 1105, a sniffer drive 1110, a detector 1115 and an interface 1120 (similar to the ones described above with reference to the PSA). Those modules are used to detect any change in the content of the rubbish bin due to the insertion of a new package (while any removal is disregarded).

Moreover, the software implementation of the server 250 is simplified (because of the lack of any modules for managing the checkout). However, the server 250 is now provided with a phone drive 1125 that is managed by the agent 327; the phone drive 1125 is used to control the communications with the telephones of the consumers.

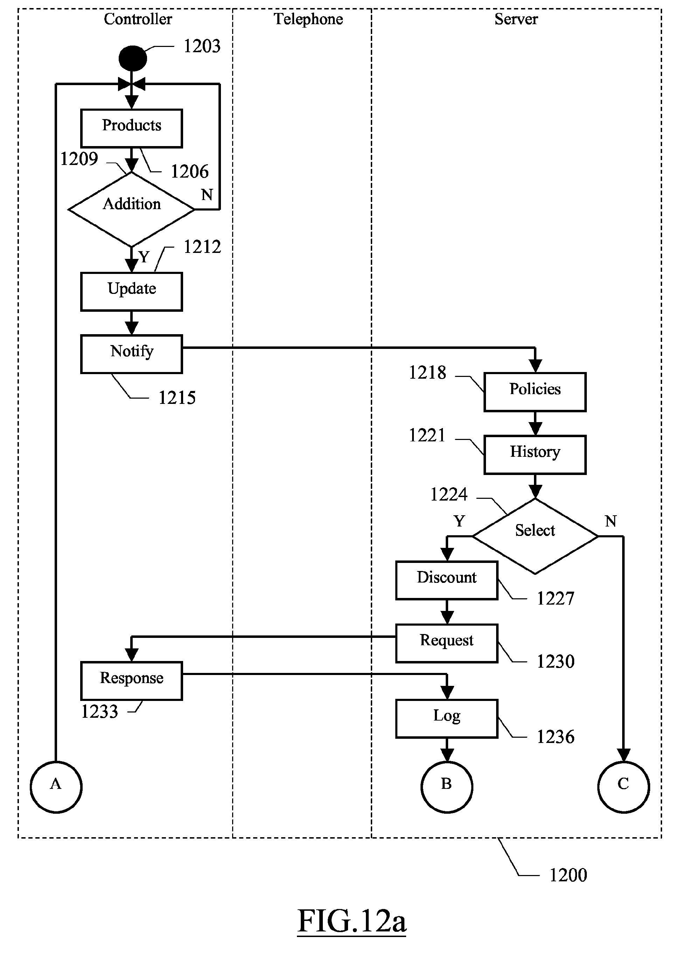

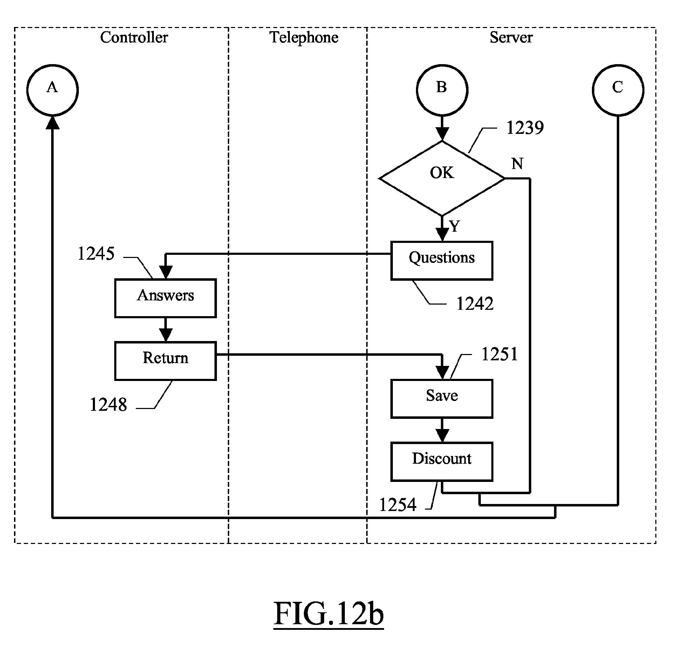

As shown in Figures 12a-12b, the logic flow of a market research process implemented by the above-described system is represented with a method 1200. The method begins at the black start circle 1203 in the swim-lane of the controller. Continuing to block 1206, the packages currently present in the rubbish bin are identified. A test is then made at block 1209 to determine whether any addition has occurred. If not, the method returns to block 1206 for repeating the same operations continually. Once the insertion of a new package into the rubbish bin is detected, the method descends into block 1212 wherein the information in the corresponding table is updated accordingly. The event is then notified to the server at block 1215.

In response thereto, the server contacts the consumer for collecting market data about the corresponding product that has been consumed. This procedure involves the execution of blocks 1218-1254. Those blocks perform the same operations described above with reference to blocks 424-460 (see Figures 4a-4b). The only difference is that the server interacts with the consumer through his/her telephone (for example, by means of short messages), and that the discount to be applied to the product is stored onto the server (see block 1254). The method then returns to block 1203 for repeating the same operations continually.

Naturally, in order to satisfy local and specific requirements, a person skilled in the art may apply to the solution described above many modifications and alterations. Particularly, although the present invention has been described with a certain degree of particularity with reference to preferred embodiment(s) thereof, it should be understood that various omissions, substitutions and changes in the form and details as well as other embodiments are possible; moreover, it is expressly intended that specific elements and/or method steps described in connection with any disclosed embodiment of the invention may be incorporated in any other embodiment as a general matter of design choice.

Particularly, the examples described in the foregoing must not be interpreted in a limitative manner and the invention can be likewise applied to any other event relating to the selection of a product (or a set of products).

Similar considerations apply to services, or more generally to any other good that can be bought, sold, or rented. Likewise, the definition of consumer extends to any individual who buys goods for personal use, manufacture or resale.

In addition, the event can be notified to any kind of service center (such as a market research agency); the service center can also contact the consumer via e-mail, voice call, or in any other way that is suitable for collecting the market data.

Similar considerations apply if the RFID devices are of a different type (for example, operating in another frequency band, such as ultrasonic or ultrared, or powered by an internal battery).

In addition, other selection criteria and/or comparisons with the historical information of the consumers are viable.

Alternatively, the proposed system can be used in a supermarket with a different structure, or in any other shopping center of the self-service type (such as a hypermarket). Likewise, the shopping cart can be replaced with a hand-held basket, or any other shopping container.

The concepts of the present invention also apply to equivalent systems for detecting the removal of the products from the shopping cart (for example, based on the comparison between the products that have been inserted and the ones that are actually purchased).

In any case, different techniques for accumulating the discounts to be applied to the products are feasible (for example, with their running total that is displayed on the PSA).

Moreover, it is possible to detect the purchase of the products even with sniffers placed at the entry door of the consumer's residence, in his/her car, and the like.

Without departing from the principles of the invention, the access code (identifying the purchase) can be provided in any other suitable format (for example, as a simple number to be inputted by the consumer); alternatively, it is also possible to ask the consumer to use his/her own fidelity card. Similar considerations apply if the kiosks have a different structure, are placed elsewhere, or are replaced with equivalent structures.

Moreover, it is possible to control the production of the access codes according to different criteria (for example, enabling it whenever the number of questions to be answered at one or more kiosks falls below a predefined threshold).

Alternatively, the consumption of the products can be detected in another way, or even with a different device (for example, a refrigerator).

Moreover, it will be apparent to those skilled in the art that the additional features providing further advantages are not essential for carrying out the invention, and may be omitted or replaced with different features.

For example, the use of a bar code reader or other systems for detecting the desired events is not excluded (either in the supermarket or at home).

In addition, the selection of the products by the consumer can be sensed with a system placed on the shelves; in any case, the solution of the invention can also find application in a traditional shopping center.

In any case, the solution of the invention leads itself to be implemented even listening for the selection of desired products only (and then always contacting the consumer when those products are selected).

Likewise, an implementation without any comparison with the historical information of the consumer is contemplated.

The implementation of the invention with the detection of the products that are inserted into the shopping cart only (disregarding their removal) is also contemplated.

Alternatively, it is possible to implement the proposed solution without applying any immediate discount to the products (for example, using standard coupons).

In addition, it is possible to detect other events similar to the purchase of the products (for example, their ordering or booking).

Likewise, different implementations of the proposed solution can detect the fruition of a service, the visit to a museum or a park.

In a different embodiment of the invention, the market research (after the purchase of the products) is performed using the PSA, or a mobile telephone of the consumer (for example, through short message texts).

Moreover, the access codes for the kiosks can be always produced (irrespectively of their availability).

Alternatively, the rubbish bin can be replaced with a sniffer that detects when the packages pass out the consumer's residence.

Similar considerations apply if the program (which may be used to implement each embodiment of the invention) is structured in a different way, or if additional modules or functions are provided; likewise, the memory structures may be of other types, or may be replaced with equivalent entities (not necessarily consisting of physical storage media). Moreover, the proposed solution lends itself to be implemented with an equivalent method (having similar or additional steps, even in a different order). In any case, the program may take any form suitable to be used by or in connection with any data processing system, such as external or resident software, firmware, or microcode (either in object code or in source code). Moreover, the program may be provided on any computer-usable medium; the medium can be any element suitable to contain, store, communicate, propagate, or transfer the program. Examples of such medium are fixed disks (where the program can be pre-loaded), removable disks, tapes, cards, wires, fibers, wireless connections, networks, broadcast waves, and the like; for example, the medium may be of the electronic, magnetic, optical, electromagnetic, infrared, or semiconductor type.

In any case, the solution according to the present invention lends itself to be carried out with a hardware structure (for example, integrated in a chip of semiconductor material), or with a combination of software and hardware.

Moreover, it should be noted that either the PSA alone or the shopping cart with this accessory device are suitable to be implemented and put on the market as stand-alone products.

Similar considerations apply to the rubbish bin. In addition, the proposed rubbish bin can also be used in other applications (even independently of the market researches). For example, this rubbish bin is suitable to be used for automatically filling a shopping list according to the products that have been consumed. Alternatively, the same solution may find application in the separate collection of rubbish. In this case, the sniffer of each bin (for the different types of rubbish, such as paper, plastic, glass, aluminum, and the like) detects when any object is approaching it. The associated controller then verifies whether the object that is to be inserted into the rubbish bin is of the correct type. If not, an alarm (such as a blinker or a buzzer) notifies the error to the user; as a further improvement, the rubbish bin may be provided with an automatic mechanism, which rejects the object and returns it to the outside. Therefore, it is possible to prevent the insertion of wrong objects into the different bins (thereby strongly improving the quality of the separate collection of rubbish).

## Claims

1. A system (100;500;900) for performing market researches including:
means (145-150;505-510;920-925) for detecting an event relating to the selection of at least one good by a consumer,
means (245;630;1030) for notifying the event to a service center (250), and
means (330-339) for causing the service center to contact the consumer for collecting market data relating to the at least one good in response to the notification of the event.

2. The system (100;500;900) according to claim 1, wherein a transponder (205) is associated with each good (110) available to be selected for emitting a response signal indicative of the good in response to an interrogation signal, the means for detecting the event (145-150;505-510;920-925) including:
means (150) for broadcasting the interrogation signal in an area of interest, and
means (150) for sensing the response signal of each transponder in the area of interest.

3. The system (100;500;900) according to claim 1 or 2, wherein the means for causing (330-339) the service center (250) to contact the consumer includes:
means (330-336) for comparing the event with a selection criterion, and
means (330) for enabling the service center to contact the consumer only when the event satisfies the selection criterion.

4. The system (100;500;900) according to claim 3, wherein the means for comparing (330-336) includes means (330-336) for determining the selection of multiple goods belonging to a common category.

5. The system (100;500;900) according to claim 3 or 4, wherein the means for comparing (330-336) includes:
means (336) for storing historical information of the consumer, and
means (330) for determining a significant divergence of the event from the historical information.

6. The system (100) according to any claim from 1 to 5, wherein each good consists of a product (110) on sale in a shopping center of the self-service type, the means for detecting the event (145-150) including means (312) for detecting the insertion of each product into a shopping container (125) of the consumer.

7. The system (100) according to claim 6, wherein the means for detecting the event (145-150) further includes means (312) for detecting the removal of the product from the shopping container (125) before reaching a checkout area (140) of the shopping center.

8. The system (100) according to claim 6 or 7, further including:
means (327,339) for causing the consumer to receive a set of questions relating to the product (110) from the service center (250),
means (315,318) for returning a set of answers to the questions from the consumer to the service center,
means (306) for accumulating a discount for the product in response to the returning of the answers, and
means (321,357) for applying the discount to a price of the product.

9. The system (500) according to any claim from 1 to 5, wherein the means for detecting the event (505-510) includes means (357) for detecting the purchase of the at least one good (110).

10. The system (500) according to claim 9, wherein the means for causing (515-520) the service center to contact the consumer includes:
means (515) for providing an access code identifying the purchase to the consumer, and
at least one kiosk (520) having means (675) for entering the access code, means (690) for downloading a set of questions relating to the at least one good from the service center (250) in response to the access code, means (680) for entering a set of answers to the questions by the consumer, and means (690) for returning the set of answers to the service center.

11. The system (500) according to claim 10, wherein the means for causing (515-520) the service center to contact the consumer further includes:
means (530) for disabling the means for providing the access code according to an availability condition of the at least one kiosk.

12. The system (900) according to any claim from 1 to 5, wherein the means for detecting the event (920-925) includes means (1115) for detecting the consumption of each good.

13. The system (900) according to claim 12, wherein the good consists of a product provided in a corresponding package (915), the means for detecting (1115) the consumption including means for detecting the insertion of the package into a rubbish bin (905).

14. A data processing structure (100;500;900) including the system (100;500;900) according to any claim from 1 to 13, and a service center (250) having means (330-339) for contacting the consumer for collecting market data relating to the at least one good in response to the notification of the event.

15. An accessory device (145) for a shopping container (125) of a shopping center of the self-service type adapted to be used in the system (100) according to any claim from 6 to 8, the device including said means (230) for detecting the insertion of the product on sale in the shopping center into the shopping container, and said means (245) for notifying the insertion to the service center (250) to cause the service center to contact the consumer for collecting market data relating to the at least one good in response to the notification of the event.

16. A shopping container (125) for use by a consumer in a shopping center of the self-service type, the shopping container including a basket (130) for products (110) to be purchased and the accessory device (145) according to claim 15.

17. A rubbish bin (905) for use in the system (900) according to claim 12 or 13, the rubbish bin including a container (910) for packages (915) of products being consumed, said means (920) for detecting the insertion of the package into the rubbish bin and said means (925) for notifying the insertion to the service center (250) to cause the service center to contact the consumer for collecting market data relating to the at least one good in response to the notification of the event.

18. A method (400;800;1200) for performing market researches including the steps of:
detecting (412-418;806-809;1206-1212) an event relating to the selection of at least one good by a consumer,
notifying (421;812;1215) the event to a service center, and
causing (424-436;815-851;1218-1230) the service center to contact the consumer for collecting market data relating to the at least one good in response to the notification of the event.

19. A computer program (303-318;795-730;1105-1120) for performing the method (400;800;1200) of claim 18 when the computer program is executed on a data processing system (145).
